(19) **Europäisches Patentamt / European Patent Office / Office européen des brevets**

(11) **EP 2 693 664 B1**

(12) **EUROPEAN PATENT SPECIFICATION**

(45) Date of publication and mention of the grant of the patent:
**19.07.2017 Bulletin 2017/29**

(51) Int Cl.:
**H04B 10/63** *(2013.01)* **H04B 10/40** *(2013.01)*

(21) Application number: **12305960.2**

(22) Date of filing: **03.08.2012**

(54) **Self coherent colorless architecture for flexible WDM access network**

Selbstkohärente, farblose Architektur für flexibles WDM-Zugriffsnetzwerk

Architecture incolore cohérente autonome pour réseau d'accès WDM souple

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.02.2014 Bulletin 2014/06**

(73) Proprietor: **ALCATEL LUCENT**
**92100 Boulogne-Billancourt (FR)**

(72) Inventors:
• **Bertran Pardo, Oriol**
  **91620 Nozay (FR)**
• **De Valicourt, Guilhem**
  **91620 Nozay (FR)**
• **Charlet, Gabriel**
  **91620 Nozay (FR)**

(74) Representative: **Berthier, Karine**
**Alcatel-Lucent International**
**148/152, route de la Reine**
**92100 Boulogne-Billancourt (FR)**

(56) References cited:
**US-A1- 2011 229 135**

• **CHAO HE ET AL: "64 channels 1Gbit/s ultra-dense WDM PON system based on coherent heterodyne receiver", ELECTRONICS AND OPTOELECTRONICS (ICEOE), 2011 INTERNATIONAL CONFERENCE ON, IEEE, 29 July 2011 (2011-07-29), pages V2-34, XP032051663, DOI: 10.1109/ICEOE.2011.6013167 ISBN: 978-1-61284-275-2**

• **HARALD ROHDE ET AL: "Next generation optical access: 1 Gbit/s for everyone", 35TH EUROPEAN CONFERENCE ON OPTICAL COMMUNICATION, 2009. ECOC '09, VIENNA, AUSTRIA, IEEE, PISCATAWAY, NJ, USA, 20 September 2009 (2009-09-20), pages 1-3, XP031546541, ISBN: 978-1-4244-5096-1**

• **CARLOS BOCK ET AL: "Ultra-Dense WDM PON based on Homodyne Detection and Local Oscillator Reuse for Upstream Transmission", PROCEEDINGS / ECOC 2006, 32ND EUROPEAN CONFERENCE ON OPTICAL COMMUNICATION : 24 - 28 SEPTEMBER 2006, CANNES, FRANCE, SEE, PARIS, FRANCE, 24 September 2006 (2006-09-24), pages 1-2, XP031437468, ISBN: 978-2-912328-39-7**

• **JOSEP M FABREGA ET AL: "Ultra-dense, transparent and resilient ring-tree access network using coupler-based remote nodes and homodyne transceivers", TRANSPARENT OPTICAL NETWORKS, 2009. ICTON '09. 11TH INTERNATIONAL CONFERENCE ON, IEEE, PISCATAWAY, NJ, USA, 28 June 2009 (2009-06-28), pages 1-4, XP031498982, ISBN: 978-1-4244-4825-8**

• **HARALD ROHDE ET AL: "Coherent optical access networks", OPTICAL FIBER COMMUNICATION CONFERENCE, 2011. TECHNICAL DIGEST. OFC/NFOEC, IEEE, 6 March 2011 (2011-03-06), pages 1-3, XP031946489, ISBN: 978-1-4577-0213-6**

EP 2 693 664 B1

**Description**

TECHNICAL FIELD

The present document relates to optical transmission networks. In particular, the present document relates to optical network units (ONUs) for a passive optical network (PON).

BACKGROUND

For next-generation access networks, upgradeability and higher capacity are likely to be required. Various network architectures enabling large bandwidth access and a high degree of scalability have been studied showing wavelength division multiplexed (WDM) passive optical networks (PONs) as one of the most promising solutions. An important building block of such WDM-PONs is the remote optical network unit (ONU) which is typically placed at a customer premise. The ONUs should preferably be colorless, i.e. wavelength independent, in order to facilitate that the same kind of remote equipment can be used in various different premises, thereby reducing the cost and complexity of the WDM-PON architecture. As a consequence, there is a need for flexible colorless solutions for optical access networks.

Another aspect is the compatibility of next-generation access networks (in particular of next-generation ONUs) with existing network architectures. In many of the proposed PON architectures, existing passive power splitters need to be replaced by AWGs (Arrayed Waveguide Grating), thereby increasing the deployment cost and thereby fixing the wavelength allocation within the network to one specific ONU (i.e. thereby reducing the flexibility within the network).

The present document addresses the technical problem of providing a cost efficient WDM-PON architecture, in particular a cost efficient ONU, which allows for a flexible use and allocation of various wavelengths, which ensures compatibility with existing PON network architectures and/or which allows for a flexible reallocation of wavelengths to the ONUs.

US Patent Application US 2011/0229135 A1 discloses an optical transceiver configured to build an optical network unit of a passive optical network. The transceiver comprises a tunable laser coupled to an optical coupler in order to provide an optical upstream signal and a local oscillator signal. The optical coupler is connected to a coherent receiver in order to provide the local oscillator signal to the coherent receiver.

SUMMARY

According to an aspect an optical network unit (ONU) is described. The ONU may be used as customer premise equipment within a passive optical network (PON). The ONU may comprise an optical transmitter configured to generate an optical upstream signal. The optical upstream signal may comprise an upstream channel, e.g. a wavelength division multiplex (WDM) channel, at an upstream wavelength. The optical transmitter may be configured to generate an optical carrier signal at the upstream wavelength and to modulate the optical carrier signal using upstream data which is to be transmitted from the ONU to a corresponding optical line terminal (OLT) of the PON. In other words, the optical upstream signal, which comprises the upstream data or which is indicative of the upstream data, is typically to be sent from the ONU to the corresponding OLT of the PON. In yet other words, the ONU may be configured to transmit the optical upstream signal into an optical fiber of the passive optical network.

The ONU may further comprise a local oscillator generation unit configured to generate a local oscillator signal at the upstream wavelength based on (or using or from) the optical upstream signal. As indicated above, the optical upstream signal may comprise an upstream channel at the upstream wavelength. The local oscillator generation unit may be configured to remove or attenuate the modulation applied to the optical carrier signal at the upstream wavelength, thereby isolating the optical carrier signal at the upstream wavelength. The isolated optical carrier signal may be used as the local oscillator signal.

It should be noted that the transmitter may be configured to continuously generate the optical upstream signal and the local oscillator generation unit may be configured to generate a continuous local oscillator signal based on the optical upstream signal which may be continuous. In particular, the transmitter may be configured to generate the optical upstream signal, and the local oscillator generation unit may be configured to generate the local oscillator signal, whenever the ONU is in an active state to receive downstream data comprised within the optical downstream signal.

In addition, the ONU may comprise a coherent receiver configured to extract a downstream channel at the upstream wavelength from an optical downstream signal, using the local oscillator signal. The optical downstream signal may have been transmitted from the corresponding OLT to the ONU. The ONU may be configured to receive the optical downstream signal from an optical fiber of the passive optical network. The optical downstream signal may be a WDM signal comprising one or more WDM channels including the downstream channel at the upstream wavelength and/or one or more neighboring downstream channels at wavelengths other than the upstream wavelength.

It should be noted that in the present document, the term "upstream" is used to indicate the direction of light / optical signals which propagate away from the ONU or away from the transmitter of the ONU. On the other hand, the term "downstream" is used to indicate the direction of light / optical signals which propagate towards the ONU or towards the receiver of the ONU.

The local oscillator generation unit may comprise an optical coupler configured to extract a fraction of the optical upstream signal. By way of example, the optical coupler may extract a fraction of 5% to 10% of the optical power of the upstream signal, thereby yielding an extracted signal which corresponds to the optical upstream signal, at a reduced power. The remaining optical upstream signal may be transmitted from the ONU to the corresponding OLT.

In addition, the local oscillator generation unit may comprise an isolator. Typically, the isolator is positioned behind the optical coupler, with respect to the direction of propagation of the extracted signal. The isolator may be configured to block light propagating in the direction from the isolator towards the optical coupler. As such, the isolator may be used to prevent reflected light from distorting the optical upstream signal.

The local oscillator generation unit may comprise a spectral line generation unit configured to generate a spectral line from the optical upstream signal or from a signal derived thereof. In particular, the spectral line generation unit may be configured to set an adequate power of the spectral line using an amplifier, for example a semiconductor optical amplifier. In other words, the spectral line generation unit may be configured to set a power of the optical upstream signal or of the signal derived thereof, thereby setting a power of the resulting local oscillator signal. Alternatively or in addition, the spectral line generation unit may be configured to attenuate a modulation component comprised within the optical upstream signal or within a signal derived thereof, e.g. within the extracted signal, thereby providing the local oscillator signal, i.e. thereby generating the spectral line from the optical upstream signal or from a signal derived thereof. The spectral line generation unit may comprise a semiconductor optical amplifier which is operated in saturation.

The coherent receiver may comprise a coherent mixer configured to overlay or mix the optical downstream signal and the local oscillator signal, thereby yielding an interference signal. The interference signal may comprise a plurality of terms (referred to as beating terms). The plurality of terms may be due to a plurality of downstream channels are a plurality of different wavelengths comprised within the downstream signal. Each of the downstream channels may be associated with a respective term within the interference signal. A baseband component, e.g. the term within the baseband, of the interference signal may correspond to a downconverted version of the downstream channel, i.e. of the downstream channel at the upstream wavelength.

In other words, the coherent mixer may be configured to demodulate the optical downstream signal using the local oscillator signal, thereby yielding the interference signal. The baseband component of the interference signal typically corresponds to a demodulated version of the downstream channel.

The coherent receiver, in particular, the coherent mixer, may be configured to allow access to all (i.e. to both) polarizations of an optical field of the optical downstream signal. As such, the coherent receiver may be configured to receive polarization division multiplexed (PDM) optical downstream signals, thereby increasing the capacity of the PON.

The coherent receiver may comprise a plurality of photodetectors configured to convert the interference signal from an optical domain into an electrical domain. The photodetectors may have a low-pass characteristic, thereby isolating the term of the interference signal within the baseband, i.e. thereby isolating the downconverted version of the downstream channel at the upstream wavelength. The photodetectors may be balanced photodetectors, thereby reducing power requirements with regards to the power of the local oscillator signal.

The transmitter of the ONU may comprise a fiber-Bragg grating (FBG) and a reflective semiconductor optical amplifier, jointly forming a laser cavity at the upstream wavelength. The FBG may be exchangeable and/or tunable, thereby providing a tunable laser cavity. As such, the transmitter may be configured to tune the upstream wavelength to different wavelengths, e.g. to different WDM channels on a pre-determined WDM grid and/or continuously to different "grid-less" WDM channels.

The ONU may further comprise an optical interface configured to connect to an optical transmission fiber of the PON, wherein the optical transmission fiber may link the ONU to the corresponding OLT. Furthermore, the ONU may comprise an optical circulator configured to forward the optical downstream signal from the optical interface to the coherent receiver; and to forward the optical upstream signal from the transmitter to the optical interface. Typically, the optical circulator is positioned behind the optical coupler, with respect to the direction of propagation of the upstream signal.

According to another aspect, a passive optical network (PON) is described. The PON may comprise an optical line terminal configured to transmit an optical downstream signal. Furthermore, the PON may comprise an optical distribution network (ODN) configured to forward the optical downstream signal or a part thereof, e.g. a downstream channel of the optical downstream signal, to one or more optical network units. In addition, the PON may comprise the one or more optical network units (ONUs). The ONUs may be configured as described in the present document.

The optical distribution network may comprise a passive optical splitter configured to forward the optical downstream signal to the one or more optical network units. As such, the optical downstream signal may be broadcasted to the one or more ONUs. In the opposite direction, the passive optical splitter may be configured to join one or more upstream signals at different upstream wavelengths transmitted by the one or more optical network units, respectively, thereby creating a WDM upstream signal comprising a plurality of WDM channels. Alternatively or in addition, the ODN may comprise an optical de-multiplexer, e.g. an arrayed waveguide grating, configured to selectively forward one or more subsets of channels comprised within the optical downstream signal to the one or more optical network units, respectively. In the opposite direction, the optical de-multiplexer may be configured to multiplex one or more upstream signals at different upstream wavelengths transmitted by the one or more optical network units, respectively, thereby creating a WDM upstream signal comprising a plurality of WDM channels.

It should be noted that the methods and systems including its preferred embodiments as outlined in the present patent application may be used stand-alone or in combination with the other methods and systems disclosed in this document. In particular, the features described in the context of a system may also be used in the context of a corresponding method. Furthermore, all aspects of the methods and systems outlined in the present patent application may be arbitrarily combined. In particular, the features of the claims may be combined with one another in an arbitrary manner.

SHORT DESCRIPTION OF THE FIGURES

The invention is explained below in an exemplary manner with reference to the accompanying drawings, wherein

Fig. 1 shows a block diagram of an example PON network;
Fig. 2 illustrates an example mixed TDM / WDM PON network;
Fig. 3 shows a block diagram of an example ONU;
Fig. 4 shows a block diagram of an example coherent receiver;
Fig. 5 illustrates block diagrams of example tunable transmitters for an ONU; and
Fig. 6 shows example PON network architectures.

DESCRIPTION

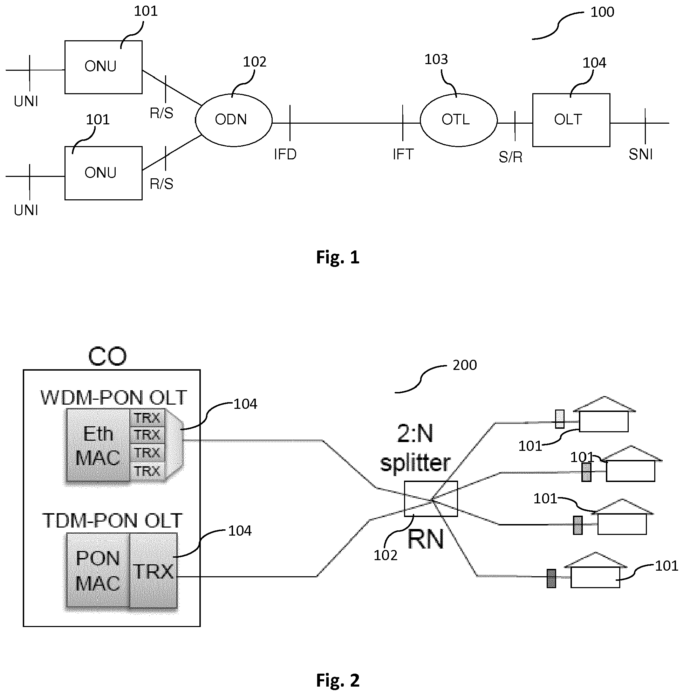

Fig. 1 illustrates an example PON network 100 with Optical Network Units (ONU) or Optical Network Terminals (ONT) 101 providing a User Network Interface (UNI). The ONUs 101 are connected to the Optical Distribution Network (ODN) 102 which may comprise an optical splitter / combiner or an Arrayed Waveguide Grating (AWG). Via an Optical Trunk Line (OTL) 103, e.g. an optical fiber, the ONUs 101 are connected to the Optical Line Terminal (OLT) 104. The OLT 104 typically receives time multiplexed optical bursts on the upstream link from a plurality of ONUs 101.

Wavelength Division Multiplexing PON (WDM-PON) may be used for increasing the capacity of PON systems. The multiple wavelengths of a WDM-PON can be used to separate individual or groups of Optical Network Units 101 into several virtual PONs co-existing on the same physical infrastructure. Typically, a wavelength of the WDM system is used for the downstream communication from a central office OLT 104 to one or more ONUs 101, and a wavelength of the WDM system is used for the upstream communication from the one or more ONUs 101 to the OLT 104. The same wavelengths may be used for downstream communication and for upstream communication (referred to as bi-directional transmission). When using the same fiber for upstream and downstream communication, such bi-directional transmission over the same fiber and using the same wavelength may add noise (due to Rayleigh scattering) to the downstream signal (from the OLT 104 to the ONUs 101) and to the upstream signal (from the ONUs 101 to the OLT 104). However, such noise is typically manageable in the case of PON systems covering a distance between OLT 104 and ONUs 101 in the range of 25km. Alternatively, the downstream and upstream communication may be performed on separate fibers.

As outlined in the background section, the present document addresses the technical problem of a cost effective, flexible and upgradeable PON architecture.

A possible approach to flexibility is the use of tunable lasers and/or tunable filters at the ONU 101, thereby providing ONUs 101 which may be tuned to different wavelengths. Such ONUs 101 comprising tunable lasers and/or tunable filters may be used in conjunction with AWGs or in conjunction with passive splitters. However, this approach may present several issues. A first issue is that the ONU's operating wavelength (i.e. the upstream wavelength) and the downstream wavelength from the central office (CO), i.e. from the OLT 104, have to be preselected so as to tune the filters and laser sources of the ONU 101 to the downstream wavelength and the upstream wavelength, respectively. This means that the use of tunable lasers (for the selection of a transmitting or upstream wavelength) and/or the use of tunable filters (for the selection of a receiving or downstream wavelength) are typically linked with significant efforts for network planning and maintenance at the ONU levels. In view of the fact that the ONUs 101 are placed at the customer premises, such network planning and maintenance efforts may be cost intensive.

A further issue is the compatibility with current TDM (Time Division Multiplexing) PON architectures. Fig. 2 illustrates an example migration, broadcast and select architecture from TDM-PON to WDM-PON. The illustrated network 200 comprises a WDM-PON OLT 104 and a TDM-PON OLT 104 at the central office. Fixed filters may be used at the TDM-PON receivers of the TDM-PON OLT 104 and/or of the TDM-PON ONUs 101, in order to block unwanted wavelengths. WDM-PON receivers of the WDM-PON OLT 104 and/or of the WDM-PON ONUs 101 may use tunable filters to select the desirable wavelengths. However, such filters are cost-intensive because such filters use complex tunable devices. By consequence, the network architecture 200 of Fig. 2 is not cost-effective.

The use of filters could be avoided with an AWG-based architecture. AWGs may be used as wavelength multiplexers / de-multiplexers and may replace the passive splitters, such that tunable filters are not required anymore to select the receiving wavelength. When replacing the passive splitters by AWGs, low cost RSOA-based ONUs 101 may be used in various configurations, e.g. laser seeding, spectrum-sliced EDFA seeding, wavelength re-use and/or RSOA-based self-seeding. However, reconfigurable network architectures are not possible when using these techniques (no flexible solution), because the upstream and downstream wavelengths are externally fixed by the AWG.

As such, it is desirable to provide an ONU architecture which allows for PONs that are cost-effective and that allow for a flexible allocation of wavelengths to different ONUs 101. In the present document, a colorless ONU architecture is described, which benefits from an enhanced channel selection inherent to coherent reception. In particular, it is proposed to use coherent detection within an ONU 101 in order to select a receiving (i.e. downstream) wavelength.

The ONU architecture described in the present document allows for a flexible WDM PON access network architecture. This is achieved by creating a spectral line (e.g. a reference frequency) within the ONU 101. The frequency of the spectral line corresponds to the WDM channel which is to be selected. The signal having this spectral line is applied within the ONU 101 as a local oscillator (LO) signal to perform coherent detection. Hence, the channel of interest may be inherently selected from the downstream signal from the OLT 104 (with no need of a tunable filter). Furthermore, the receiver of the ONU 101 benefits from the excellent sensitivity of the coherent receiver.

Alternatively or in addition, it is proposed to include a Fiber-Bragg Grating (FBG) in the ONU 101 in order to implement a transmitter of the ONU 101. The FBG acts as a passive filter which allows implementing a laser cavity based on a RSOA-based self-seeding approach. The FBG may be implemented in a tunable manner in order to provide for a wavelength tunable transmitter of the ONU 101. Furthermore, an optical circulator may be located in the ONU in order to separate the upstream signal (from the ONU 101 to the OLT 104) and the downstream signal (from the OLT 104 to the ONU 101).

The ONU architecture described in the present document is very versatile. The proposed architecture fulfills the requirements of time-domain multiplexing (TDM)-PON and of WDM PON. This means that the ONUs which are described in the present document may be used in conjunction with TDM-PONs and with WDM PONs. With regards to a broadcast & select WDM-PON, the proposed ONU architecture eliminates the need of having complex tunable filters within the ONUs. Furthermore, the proposed ONU architecture may be operate within AWG-based PONs and/or within power-splitter-based PONs and allows for a smooth migration from existing PONs to next generation PONs.

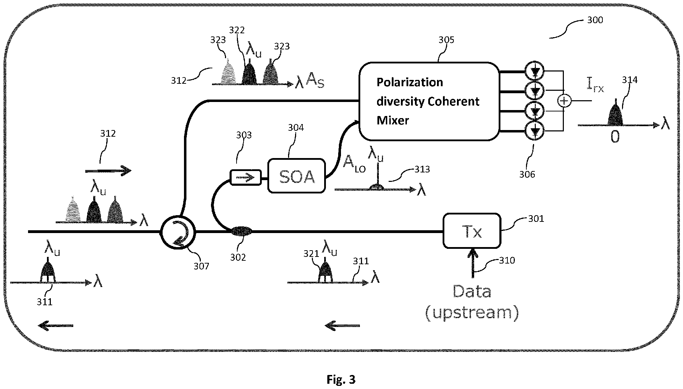

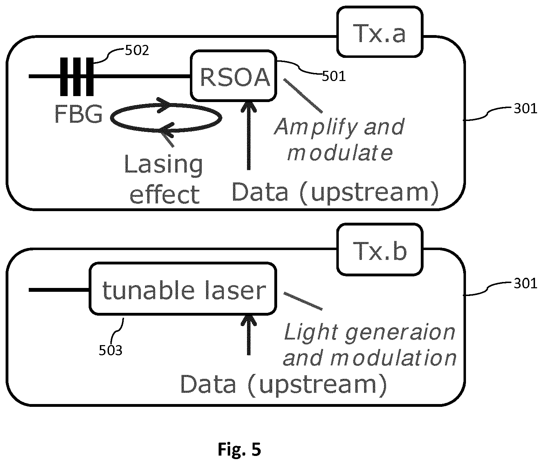

Fig. 3 shows a block diagram of an example ONU 101, 300. The ONU 300 comprises a transmitter 301 which generates an optical upstream signal 311 from upstream data 310 which is to be sent from the ONU 300 to a corresponding OLT 104. The optical upstream signal 311 has an upstream wavelength $\lambda_u$ which may be set by the transmitter 301 of the ONU 300. In particular, the optical upstream signal 311 may comprise an upstream channel 321 (e.g. a WDM channel) at the upstream wavelength $\lambda_u$. The transmitter 301 may comprise a laser 503 which is preferably tunable and which may generate an optical signal at the upstream wavelength $\lambda_u$ (see Fig. 5). Alternatively or in addition, the transmitter 301 may comprise a FBG 502 which is preferably tunable and which may generate a lasing cavity in conjunction with a Reflective Semiconductor Optical Amplifier (RSOA) 501 (see Fig. 5), thereby generating an optical signal at the upstream wavelength $\lambda_u$. The upstream data 310 is used to modulate the optical signal at the upstream wavelength $\lambda_u$, thereby providing the upstream signal 311. It should be noted that the transmitter 301 may be operated in a continuous wave (CW) mode, i.e. with no modulation, e.g. when the ONU 300 is just receiving data (and when the ONU 300 is not emitting data). As such, it may be ensured that the transmitter 301 is configured to generate an optical signal, e.g. a CW signal, at the upstream wavelength $\lambda_u$, whenever the ONU 300 receives data, preferably also at time instants when the ONU 300 does not emit data.

The optical upstream signal 311 is transmitted over an optical transmission fiber to the corresponding OLT 104. The ONU 300 may comprise a circulator 307 configured to forward the optical upstream signal 311 onto an optical transmission fiber of the PON system. Furthermore, the ONU 300 may comprise an optical coupler 302 configured to extract a fraction of the optical upstream signal 311 prior to transmission over the optical transmission fiber. By way of example, the optical coupler 302 may be configured to extract a fraction of 5% or 10% of the energy of the optical upstream signal 311, thereby yielding an extracted signal. The remaining optical upstream signal 311 may then be put onto the optical transmission fiber using the circulator 307. The fraction of the energy of the optical upstream signal 311 that is extracted may be small, as an optical amplifier (e.g. an SOA is used as spectral line generation unit) may be used to amplify the extracted signal before entering a coherent receiver 305, 306.

The extracted signal may be used to generate the local oscillator signal for a coherent receiver 305, 306 of the ONU 300. For this purpose, the ONU 300 may comprise an isolator 303 configured to transmit the extracted signal, which is propagating from the transmitter 301 to the coherent receiver 305, 306, and configured to block an optical signal propagating in the opposite direction. The optical signal propagating in the opposite direction usually results from internal reflection at components in the signal path after the isolator 303, in the propagation direction of the extracted signal. As such, the isolator 303 may be used to prevent the generation of additional optical noise on the upstream transmission path from the transmitter 301 of the ONU 300 to a receiver of the corresponding OLT 104, and to avoid optical feedback into the lasing cavity or the laser of the transmitter 301 of the ONU 300 (and to thereby protect the transmitter 301).

The optical upstream signal 311 (and by consequence the extracted signal) comprises the upstream data 310 which has been modulated onto the optical signal at the upstream wavelength $\lambda_u$. As such, the extracted signal has a certain bandwidth around the upstream wavelength $\lambda_u$, which is represented in Fig. 3 by the shaded area around the spectral line at the upstream wavelength $\lambda_u$. The ONU 300 may comprise a spectral line generation unit 304, which is configured to extract an optical signal 313 at the upstream wavelength $\lambda_u$ from the extracted signal. In particular, the spectral line generation unit 304 may be configured to amplify the extracted signal at the upstream wavelength $\lambda_u$ and/or to reduce the spectral broadening of the extracted signal around the upstream wavelength $\lambda_u$, which is due to the modulation of the optical upstream signal 311 within the transmitter 301. For this purpose, the spectral line generation unit 304 may e.g. comprise a Semiconductor Optical Amplifier (SOA). The SOA may be operated in a saturation state, thereby providing the above mentioned function. It should be noted that while the use of an SOA within the spectral line generation unit 304 is a preferred solution, there are other means for reducing the spectral broadening of and for amplifying the extracted signal, in order generate a spectral line at the upstream wavelength $\lambda_u$. The output signal 313 of the spectral line generation unit 304 has an amplitude or energy $A_{LO}$ and comprises a frequency component at the upstream wavelength $\lambda_u$ (whereas all other frequency components of the extracted signal have been attenuated and therefore constitute noise). The output signal 313 may be used as a local oscillator signal 313 (at the upstream wavelength $\lambda_u$) for the coherent receiver 305, 306 of the ONU 300.

In more general terms, the ONU 300 may comprise a local oscillator generation unit 302, 303, 304 which is configured to generate the local oscillator signal 313 from the upstream signal 311. In the illustrated example, the local oscillator generation unit 302, 303, 304 comprises the coupler 302, the optional isolator 303 and the spectral line generation unit 304.

On the reception path, the ONU 300 comprises the circulator 307 which is configured to receive an optical downstream signal 312 from an optical transmission fiber of the PON system and to forward the optical downstream signal 312 to the coherent receiver 305, 306. The optical downstream signal 312 may comprise a WDM signal comprising a plurality of downstream channels 322, 323 at a plurality of different WDM wavelengths. The optical downstream signal 312 may have been broadcasted by the OLT 104 to a plurality of different ONUs 101, 300. The ONUs 101, 300 may be configured to select one or more of the plurality of downstream channels 322, 323 from the optical downstream signal 312 based on the plurality of different WDM wavelengths of the plurality of downstream channels 322, 323. In particular, the optical downstream signal 312 comprises a downstream channel 322 at the upstream wavelength $\lambda_u$. Furthermore, the optical downstream signal 312 may comprise one or more neighboring downstream channels 323 at wavelengths which are different from the upstream wavelength $\lambda_u$.

The coherent receiver 305 comprises a coherent mixer 305 and a set of photodiodes 306. The coherent mixer 305 is preferably polarization divers, thereby allowing access to the complete optical field of the optical downstream signal 312. The coherent mixer 305 is configured to demodulate the optical downstream signal 312 by overlaying the optical downstream signal 312 with the local oscillator signal 313, which corresponds to a spectral line at the upstream wavelength $\lambda_u$, thereby creating an interference signal with several beating terms at different frequencies. In particular, the interference signal comprises a beating term within the baseband, which corresponds to the downstream channel at the upstream wavelength $\lambda_u$. The set of photodiodes 306 may be used to select the beating term within the baseband, i.e. the downstream channel at the upstream wavelength $\lambda_u$, due to the inherent low pass characteristic of the photodiodes, thereby yielding the received signal 314.

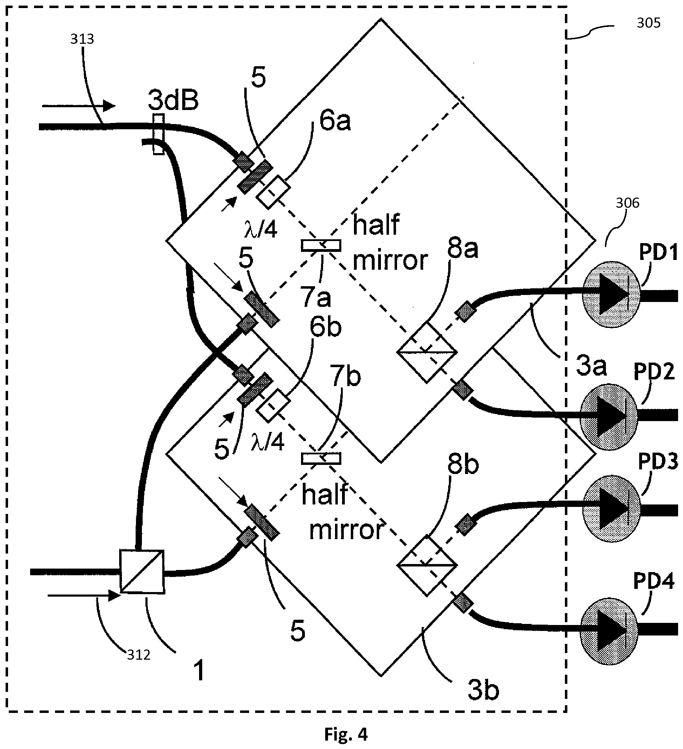

Fig. 4 shows a block diagram of an example polarization diversity coherent receiver 305, 306. It should be noted that the coherent receiver 305, 306 may also be used for receiving a Polarization Division Multiplex (PDM) optical signal. As such, the ONU 300 comprising the polarization diversity coherent receiver 305, 306 may be used in conjunction with PDM PONs, thereby further increasing the transmission capacity of PONs.

The coherent receiver 305, 306 is configured to generate in-phase and quadrature-phase components of the downstream channel at the upstream wavelength $\lambda_u$ for two orthogonal polarizations of the optical downstream signal 312. The receiver 305, 306 comprises a polarization beam splitter (PBS) 1, which splits the optical downstream signal 312 into a first optical wave and a second optical wave, with the polarizations of the first and second optical waves being orthogonal.

The first optical wave is fed to a first coherent demodulator 3a, whereas the second optical wave is fed to a second coherent demodulator 3b. Both the first coherent demodulator 3a and the second coherent demodulator 3b receive the local oscillator (LO) signal 313 for superimposing the first optical wave and the second optical wave with the LO signal 313, respectively. As outlined above, the LO signal 313 is at the upstream wavelength $\lambda_u$ and may be used to extract the downstream channel at the upstream wavelength $\lambda_u$ from the optical downstream signal 312.

Polarizers 5 at the inputs of the demodulators 3a and 3b can be used to improve the polarization quality. Downstream of the polarizers 5, at the LO input of both demodulators 3a, 3b a $\lambda/4$ wave plate 6a, 6b is provided. The wave plates 6a, 6b are used for making the polarization of the LO signal 313 circular, while the signal remains linearly polarized. After passing through half mirrors 7a, 7b for superimposing the LO signal 313 and the first and second optical waves, the PBS 8a, 8b are used for generating two orthogonal phases, respectively.

The four outputs of the two demodulators 3a, 3b are coupled to the inputs of four photodiodes PD1-4 306, thereby generating four electrical currents. The beating term of the current of photodiode PD1 corresponds to the quadrature-phase component of a first polarization of the received signal 314, i.e. of the downstream channel at the upstream wavelength $\lambda_u$, which has been downconverted into the baseband. The first polarization corresponds to the polarization of the first wave as generated by PBS 1. The beating term of the current of photodiode PD2 corresponds to the in-phase component of the first polarization of the received signal 314. The beating term of the current of photodiode PD3 corresponds to the quadrature-phase component of a second polarization of the received signal 314. The second polarization corresponds to the polarization of the second wave as generated by PBS 1. The beating term of the current of photodiode PD4 corresponds to the in-phase component of the second polarization of the received signal 314.

To summarize, the downstream channel at the upstream wavelength $\lambda_u$ may be extracted from the downstream signal 312 by demodulation of the downstream signal 312 using the local oscillator signal 313. In particular, the downstream signal 312 and the local oscillator signal 313 may be overlaid, thereby creating a beating term in the baseband, which corresponds to the downstream channel at the upstream wavelength $\lambda_u$. The beating term in the baseband may be extracted using the low pass characteristic of the photodiodes 306, thereby providing the received signal 314 corresponding to the downstream channel at the upstream wavelength $\lambda_u$.

The four output signals of the photodiodes PD1-PD4 may be fed to four ADCs (analog-to-digital converter). The sampled signals of the ADCs may be fed to a digital signal processing unit. The digital signal processing unit may be implemented by a software programmable digital signal processor or by dedicated hardware or by a combination of both. Preferably, the digital signal processing unit is integrated on an ASIC (application specific integrated circuit). The digital signal processing unit may be configured to recover downstream data (sent from the OLT 104 to the ONU 101, 300) from the received signal 314.

Instead of using four photodiodes PD1-PD4, four balanced photodetectors may be used, with each balanced photodetector including two photodiodes. Each balanced photodetector is associated with an ADC. Each photodetector is connected to two fibers, one fiber for one photodiode and the other fiber for the other photodiode. The output current of such balanced detector is proportional to the difference of the currents of the two photodiodes. The additional optical signals to be provided by the coherent mixer 305 - the number of the optical signals is doubled - may be generated by using additional PBSs similar to PBSs 8a, 8b. The additional PBSs may be placed at the unused other dashed lines after the half mirrors 7a, 7b shown in Fig. 4.

As such, the ONU 300 may be configured to select a downstream channel at a particular wavelength from the optical downstream signal 312 without the need of a fixed or tunable filter. It should be noted that the coherent receiver 305, 306 comprising the coherent mixer 305 and the photodiodes 306 can be implemented on a photonic integrated circuit (PIC), thereby allowing for a cost-effective implementation of the ONU 300.

As outlined above, Fig. 3 shows a block diagram of an example ONU 300 and Fig. 5 shows a block diagram of example transmitters 301 of ONU 300. As can be observed from Fig. 5, the internal connecting fiber of ONU 300 may incorporate a fiber-Bragg grating (FBG) 502 in its extremity, i.e. in front of the RSOA 501. This FBG 502 may be used to determine the frequency of the optical upstream signal 311 and of the spectral line acting as a local oscillator signal 313. The cavity generated between the reflective semi-conductor optical amplifier (RSOA) 501 and the FBG 502 creates a spectral line that may be modulated with the upstream data 310 to generate the upstream signal 311. A small amount of the optical upstream signal 311, which may be modulated or continuous wave, is tapped, e.g. using coupler 302, and sent to a semi-conductor optical amplifier (SOA) 304. This SOA 304, working in saturation regime, erases the modulation of the extracted signal, when it is modulated, and generates and/or amplifies a spectral line 313 at the frequency of the desired downstream channel, and the spectral line 313 may act as local oscillator to the coherent receiver 305, 306.

The optical downstream signal 312, which may comprise both polarizations, is mixed with the generated spectral line, which acts as local oscillator 313, using a polarization diversity coherent mixer 305. The photocurrents obtained after photodetection are proportional to real and imaginary parts of the downstream optical signal 312 along both polarizations, so as:

$$I_{PD1} \propto \mathrm{Re}\left\{A_{LO}DS_{TE}\right\} \quad I_{PD3} \propto \mathrm{Re}\left\{A_{LO}DS_{TM}\right\}$$

$$I_{PD2} \propto \mathrm{Im}\left\{A_{LO}DS_{TE}\right\} \quad I_{PD4} \propto \mathrm{Im}\left\{A_{LO}DS_{TM}\right\},$$

where DS represents the optical field of the downstream optical signal 312, which includes different wavelength channels, TE, TM are the two polarizations of the optical field and $A_{LO}$ represents the optical field of the generated spectral line 313 acting as local oscillator.

After the coherent detection, several beating terms are generated. Only the beating between the desired channel of the optical downstream signal 312 at the upstream wavelength $\lambda_u$ and the local oscillator signal 313 is in the baseband, because the desired channel and the local oscillator signal 313 have the same frequency. On the other hand, the beating terms corresponding to the rest of the channels of the downstream signal 312 are filtered out because these beating terms are outside of the low pass band of the photodiodes 306. In other words, the overlay of the downstream signal 312 and the local oscillator signal 313 provides an interference signal comprising a plurality of beating terms. The beating term which results from the overlay of the downstream channel at the upstream wavelength $\lambda_u$ and the local oscillator signal 313 at the upstream wavelength $\lambda_u$ lies within the baseband, wherein beating terms which result from the overlay of the local oscillator signal 313 with other downstream channels at wavelengths which are different from the upstream wavelength $\lambda_u$ lie in frequency bands which are outside of the low pass band of the photodiodes 306. By consequence, the beating term in the baseband, i.e. the demodulated downstream channel at the upstream wavelength $\lambda_u$, can be extracted using the photodiodes 306.

In order to ensure a correct operation of the coherent receiver 305, 306, the power of the local oscillator 313 should be significantly higher than the power of the downstream signal 312. This may be achieved by using an amplifier within the spectral line generation unit 304. It should be noted that the photodiodes 306 can be single-ended or balanced, as outlined above. Balanced photo-detection reduces the above mentioned power constraints and can enhance the performance when several wavelengths channels are present in the downstream signal 312. As such, the use of balanced photodiodes 306 may be preferable, in order to reduce the power constraints with regards to the local oscillator signal 313.

It should be noted that, in access networks, signals may be modulated with on-off keying (OOK). When dealing with such kind of downstream signals 312, a simple addition of the photocurrents provided by the photodiodes 306 may be enough to recover the desired channel 314 from the downstream signal 312, as illustrated in Fig. 3.

Different approaches could be used to implement this concept of a tunable transceiver 300, as shown in Fig. 5. One could use e.g. an inter-changeable FBG 502, which could be used to set the received and emitted wavelength $\lambda_u$, i.e. to set the downstream and the upstream wavelength $\lambda_u$, or a tunable FBG 502, which could be used to tune the received and emitted wavelength $\lambda_u$. Both may be used in conjunction with a RSOA. The first approach, which uses interchangeable FBGs 502, is more complicated when the wavelength at the ONUs 300 need to be tuned regularly, e. g. in the context of a broadcast and select approach without AWG, because the FBG 502 would need to be changed physically. The second approach is more flexible as the same ONU 300 could be used for various different downstream and the upstream wavelengths $\lambda_u$, without any change of devices. The FBG 502 could be tuned, mechanically or thermally, in order to select different wavelengths. However, the use of tunable FBGs 502 may have an impact on the cost and on the wavelength dynamic range. Alternatively or in addition, one could use a directly-modulated tunable laser 503 to generate the upstream signal 311. This, however, may be less cost-effective than the use of FBGs 502 in combination with an RSOA 501. On the other hand, directly-modulated tunable lasers may be interesting when integrated in silicon (referred to as hybrid approach) in order to reduce the overall cost.

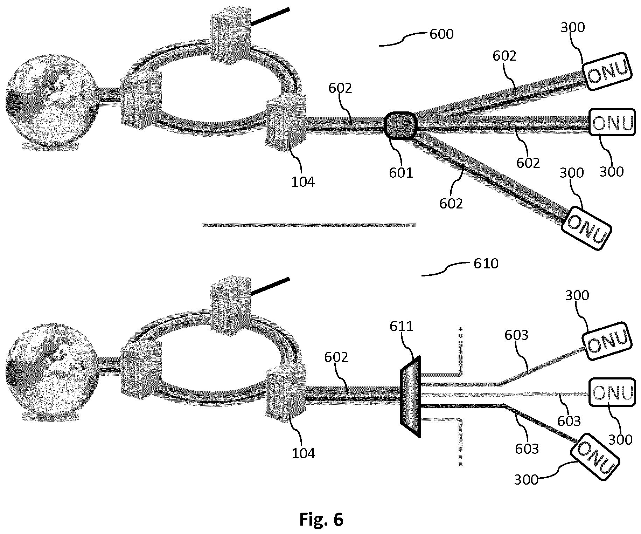

As outlined above, the proposed ONU architecture filters out the neighbor channels of the downstream signal 312. Consequently, the ONUs 300 can be used in different WDM-PON architectures, e.g. the ones presented in Fig. 6. In the upper WDM-PON 600 of Fig. 6, the downstream signal 602, which comprises a plurality of WDM channels, is distributed to a plurality of ONUs 300 through a power splitter 601. Hence, the desired channel within the downstream signal 602 is selected at the ONU 300 according to the process described in the present document.

In the lower WDM-PON 610 of Fig. 6, a waveguide array (AWG) 611 filters the corresponding wavelengths and sends them as individual downstream signals 603, which comprise a reduced number of channels, e.g. only one channel, to the corresponding ONUs 300. In this case, the ONU 300 described in the present document can be further simplified. Indeed, there is no need for the FBG 502 or the laser 503 to be tunable, since the operating frequency is determined by the received downstream signal 603, which comprises e.g. only a single WDM channel, and whose frequency is also used for the local oscillator.

It should be noted that the ONU 300 which is described in the present document can also be operated in a hybrid TDM-WDM-PON.

As outlined above, the proposed ONU architecture works e.g. when the downstream and the upstream signals propagate at the same time over the same fiber with the same frequency, but with different senses of propagation.

In the present document an architecture for an ONU in a PON, e.g. in a WDM-PON, has been described. The proposed ONU architecture is colorless, thereby allowing for a flexible deployment of ONUs within the PON. Furthermore, the proposed ONU architecture takes advantages of the filtering capabilities of coherent receivers and benefits from the excellent noise sensitivity of this detection scheme. The proposed ONU generates the local oscillator internally in accordance to the desired channel which is to be received. At the same time, the proposed ONU architecture allows for a reconfigurable PON network. The proposed ONU architecture makes use of only one tunable device, for the receiver and for the transmitter side. This tunable device, e.g. a tunable FBG, may be implemented at low-costs compared to more expensive technologies, such as tunable lasers and/or filters. In addition, the proposed ONUs can be deployed in existing network architectures, with no need for AWGs.

It should be noted that the description and drawings merely illustrate the principles of the proposed methods and systems. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the proposed methods and systems and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

In addition, it should be noted that the functions of the various elements described in the present patent document may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Finally, it should be noted that any block diagrams herein represent conceptual views of illustrative circuitry embodying the principles of the invention.

**Claims**

1. An optical network unit (300), referred to as ONU, for a passive optical network (100, 600, 610), referred to as PON, the ONU (300) comprising

   - a transmitter (301) configured to generate an optical upstream signal (311); wherein the optical upstream signal (311) comprises an upstream channel (321) at an upstream wavelength;
   - a local oscillator generation unit (302, 303, 304) configured to generate a local oscillator signal (313) at the upstream wavelength using the optical upstream signal (311), the local oscillator generation unit (302, 303, 304) comprising a spectral line generation unit (304) configured to attenuate a modulation component comprised within the optical upstream signal (311) or within a signal derived thereof; and
   - a coherent receiver (305, 306) configured to extract a downstream channel (322) at the upstream wavelength from an optical downstream signal (312) using the local oscillator signal (313).

2. The ONU (300) of claim 1, wherein

   - the ONU (300) is configured to transmit the optical upstream signal (311) into an optical fiber of the passive optical network (100, 600, 610), and/or
   - the ONU (300) is configured to receive the optical downstream signal (312) from an optical fiber of the passive optical network (100, 600, 610).

3. The ONU (300) of any previous claim, wherein the local oscillator generation unit (302, 303, 304) comprises

   - an optical coupler (302) configured to extract a fraction of the optical upstream signal (311).

4. The ONU (300) of claim 3, wherein the local oscillator generation unit (302, 303, 304) comprises an isolator (303) configured to prevent light reflected by components of the local oscillator generation unit (302, 303, 304) and/or the coherent receiver (305, 306) from distorting the optical upstream signal (311) and/or from damaging the transmitter (301).

5. The ONU (300) of any previous claim, wherein the spectral line generation unit (304) is further configured to

   - set a power of the optical upstream signal (311) or of the signal derived thereof, thereby setting a power of the local oscillator signal (313).

6. The ONU (300) of any previous claim, wherein the spectral line generation unit (304) comprises a semiconductor optical amplifier operated in a saturation state.

7. The ONU (300) of any previous claim, wherein the coherent receiver (305, 306) comprises a coherent mixer (305) configured to demodulate the optical downstream signal (312) using the local oscillator signal (313), thereby yielding an interference signal; wherein a baseband component of the interference signal corresponds to a demodulated version of the downstream channel (312).

8. The ONU (300) of claim 7, wherein the coherent receiver (305, 306) comprises a plurality of photodetectors (306) configured to convert signal components of the interference signal from an optical domain into an electrical domain.

9. The ONU (300) of any previous claim, wherein the coherent receiver (305, 306) is configured to access all polarizations of an optical field of the optical downstream signal (312).

10. The ONU (300) of any previous claim, wherein the transmitter (301) comprises a fiber-Bragg grating (502) and a reflective semiconductor optical amplifier (501), jointly configured to form a laser cavity at the upstream wavelength.

11. The ONU (300) of any previous claim, wherein the transmitter (301) is configured to tune the upstream wavelength.

12. The ONU (300) of any previous claim, wherein

   - the upstream channel (321) and the downstream channel (322) are wavelength division multiplex, referred to as WDM, channels; and/or
   - the optical downstream signal (312) comprises one or more neighboring downstream channels (323) at wavelengths other than the upstream wavelength; and/or
   - the optical upstream signal (311) comprises one or more neighboring upstream channels at wavelengths other than the upstream wavelength.

13. The ONU (300) of any previous claim further comprising

   - an optical interface configured to connect to an optical transmission fiber of the PON (100, 600, 610); and
   - an optical circulator (307) configured

      - to forward the optical downstream signal (312) from the optical interface to the coherent receiver (305, 306); and
      - to forward the optical upstream signal (311) from the transmitter (301) to the optical interface.

14. A passive optical network (100, 600, 610) comprising

   - an optical line terminal (104) configured to transmit an optical downstream signal (312);
   - an optical distribution network (102, 601, 611) configured to forward the optical downstream signal (312) or a part thereof to one or more optical network units (101, 300); and
   - the one or more optical network units (101, 300) according to any of claims 1 to 13.

15. The passive optical network (100, 600, 610) of claim 14, wherein the optical distribution network (102, 601, 611) comprises

   - a passive optical splitter (601, 102) configured to forward the optical downstream signal (312) to the one or more optical network units (101, 300) and/or configured to join one or more upstream signals (311) at different upstream wavelengths transmitted by the one or more optical network units (101, 300), respectively; or
   - an optical de-multiplexer (611), e.g. an arrayed waveguide grating, configured to selectively forward one or more subsets of channels comprised within the optical downstream signal (312) to the one or more optical network units (101, 300), respectively, and/or configured to multiplex one or more upstream signals (311) at different upstream wavelengths transmitted by the one or more optical network units (101, 300), respectively.

**Patentansprüche**

1. Optische Netzwerkeinheit (300), genannt ONU, für ein passives optisches Netzwerk (100, 600, 610), genannt PON, wobei die ONU (300) umfasst:

- einen Sender (301), konfiguriert zum Erzeugen eines optischen Aufwärtssignals (311); wobei das Aufwärtssignal (311) einen Aufwärtskanal (321) mit einer Aufwärtswellenlänge umfasst;
- eine Lokaloszillator-Erzeugungseinheit (302, 303, 304), konfiguriert zum Erzeugen eines Lokaloszillatorsignals (313) mit der Aufwärtswellenlänge unter Verwendung des optischen Aufwärtssignals (311), wobei die Lokaloszillator-Erzeugungseinheit (302, 303, 304) eine Spektrallinien-Erzeugungseinheit (304) umfasst, konfiguriert zum Abschwächen einer Modulationskomponente, enthalten innerhalb des optischen Aufwärtssignals (311) oder innerhalb eines davon abgeleiteten Signals; und
- einen kohärenten Empfänger (305, 306), konfiguriert zum Extrahieren eines Abwärtskanals (322) mit der Aufwärtswellenlänge von einem optischen Abwärtssignal (312) unter Verwerdung des Lokaloszillatorsignals (313).

2. ONU (300) nach Anspruch 1, wobei

- die ONU (300) zum Übertragen des optischen Aufwärtssignals (311) in eine optische Faser des passiven optischen Netzwerks (100, 600, 610) konfiguriert ist, und/oder
- die ONU (300) zum Empfangen des optischen Abwärtssignals (312) von einer optischen Faser des passiven optischen Netzwerks (100, 600, 610) konfiguriert ist.

3. ONU (300) nach einem beliebigen der vorstehenden Ansprüche, wobei die Lokaloszillator-Erzeugungseinheit (302, 303, 304) umfasst:

- einen optischen Koppler (302), konfiguriert zum Extrahieren eines Anteils des optischen Aufwärtssignals (311).

4. ONU (300) nach Anspruch 3, wobei die Lokaloszillator-Erzeugungseinheit (302, 303, 304) einen Isolator (303) umfasst, der konfiguriert ist, um zu verhindern, dass Licht von den Komponenten der Lokaloszillator-Erzeugungseinheit (302, 303, 304) reflektiert wird und/oder der kohärente Empfänger (305, 306) das optische Aufwärtssignal (311) verzerrt und/oder den Sender (301) beschädigt.

5. ONU (300) nach einem beliebigen der vorstehenden Ansprüche, wobei die Spektrallinien-Erzeugungseinheit (304) ferner konfiguriert ist zum

- Einstellen einer Leistung des optischen Aufwärtssignals (311) oder des davon abgeleiteten Signals, sodass eine Leistung des Lokaloszillatorsignals (313) eingestellt wird.

6. ONU (300) nach einem beliebigen der vorstehenden Ansprüche, wobei die Spektrallinien-Erzeugungseinheit (304) einen optischen Halbleiterverstärker umfasst, der gesättigt betrieben wird.

7. ONU (300) nach einem beliebigen der vorstehenden Ansprüche, wobei der kohärenten Empfänger (305, 306) einen kohärenten Mischer (305) umfasst, der konfiguriert ist zum Demodulieren des optischen Abwärtssignals (312) unter Verwerdung des Lokaloszillatorsignals (313), sodass ein Interferenzsignal erzielt wird; wobei eine Basisbandkomponente des Interferenzsignals einer demodulierten Version des Abwärtskanals (312) entspricht.

8. ONU (300) nach Anspruch 7, wobei der kohärente Empfänger (305, 306) eine Vielzahl von Photodetektoren (306) umfasst, die konfiguriert sind zum Umwandeln von Signalkomponenten des Interferenzsignals von einem optischen Bereich in einen elektrischen Bereich.

9. ONU (300) nach einem beliebigen der vorstehenden Ansprüche, wobei der kohärente Empfänger (305, 306) konfiguriert ist zum Zugreifen auf alle Polarisierungen eines optischen Felds des optischen Abwärtssignals (312).

10. ONU (300) nach einem beliebigen der vorstehenden Ansprüche, wobei der Sender (301) ein Faser-Bragg-Gitter (502) und einen optischen Halbleiterverstärker (501) umfasst, die gemeinsam zum Bilden einer Laserkavität mit der Aufwärtswellenlänge konfiguriert sind.

11. ONU (300) nach einem beliebigen der vorstehenden Ansprüche, wobei der Sender (301) zum Einstellen der Aufwärtswellenlänge konfiguriert ist.

**12.** ONU (300) nach einem beliebigen der vorstehenden Ansprüche, wobei

- der Aufwärtskanal (321) und der Abwärtskanal (322) Wellenlängenmultiplex-, WDM genannte, Kanäle sind; und/oder
- das optische Abwärtssignal (312) einen oder mehrere benachbarte Abwärtskanäle (323) mit Wellenlängen mit Ausnahme der Aufwärtswellenlänge umfasst; und/oder
- das optische Aufwärtssignal (311) einen oder mehrere benachbarte Aufwärtskanäle mit Welienlängen mit Ausnahme der Aufwärtswellenlänge umfasst.

**13.** ONU (300) nach einem beliebigen der vorstehenden Ansprüche, ferner umfassend

- eine optische Schnittstelle, konfiguriert zum Verbinden mit einer optischen Übertragungsfaser des PON (100, 600, 610); und
- einen optischen Zirkulator (307), konfiguriert

- zum Weiterleiten des optischen Abwärtssignals (312) von der optischen Schnittstelle zum kohärenten Empfänger (305, 306); und
- zum Weiterleiten des optischen Aufwärtssignals (311) vom Sender (301) zur optischen Schnittstelle,

**14.** Passives optisches Netzwerk (100, 600, 610), umfassend

- ein optisches Leitungsendgerät (104), konfiguriert zum Übertragen eines optischen Abwärtssignals (312);
- ein optisches Verteilungsnetzwerk (102, 601, 611), konfiguriert zum Weiterleiten des optischen Abwärtssignals (312) oder eines Teils davon zu einer oder mehreren optischen Netzwerkeinheiten (101, 300); und
- die eine oder mehreren optischen Netzwerkeinheiten (101, 300) nach einem der Ansprüche 1 bis 13.

**15.** Passives optisches Netzwerk (100, 600, 610) nach Anspruch 14, wobei das optische Verteilungsnetzwerk (102, 601, 611) umfasst:

- einen passiven optischen Splitter (601, 102), konfiguriert zum Weiterleiten des optischen Abwärtssignals (312) zu der einen oder den mehreren optischen Netzwerkeinheiten (101, 300) und/oder konfiguriert zum Anschließen eines oder mehrerer Aufwärtssignale (311) mit verschiedenen Aufwärtswellenlängen, die jeweils von der einen oder den mehreren optischen Netzwerkeinheiten (101, 300) übertragen werden; oder
- einen optischen Demultiplexer (611), z. B. ein Wellenleiter-Gitter-Array, konfiguriert zum ausgewählten Weiterleiten von einem oder mehreren Teilsätzen von Kanälen, enthalten im optischen Abwärtssignal (312), jeweils zu der einen oder den mehreren optischen Netzwerkeinheiten (101, 300), und/oder konfiguriert zum Multiplexen eines oder mehrerer Aufwärtssignale (311) mit verschiedenen Aufwärtswellenlängen, die jeweils von der einen oder den mehreren optischen Netzwerkeinheiten (101, 300) übertragen werden.

**Revendications**

**1.** Unité de réseau optique (300), appelée ONU, destinée à un réseau optique passif (100, 600, 610), appelé PON, l'ONU (300) comprenant

- un émetteur (301) configuré pour générer un signal optique amont (311), le signal optique amont (311) comprenant un canal amont (321) de longueur d'onde amont ;
- une unité de génération d'oscillateur local (302, 303, 304) configurée pour générer un signal d'oscillateur local (313) de longueur d'onde amont à l'aide du signal optique amont (311), l'unité de génération d'oscillateur local (302, 303, 304) comprenant une unité de génération de raie spectrale (304) configurée pour atténuer une composante de modulation contenue dans le signal optique amont (311) ou dans un signal dérivé de celui-ci ; et
- un récepteur cohérent (305, 306) configuré pour extraire un canal aval (322) de longueur d'onde amont d'un signal optique aval (312) à l'aide du signal d'oscillateur local (313).

**2.** ONU (300) selon la revendication 1, dans laquelle

- l'ONU (300) est configurée pour transmettre le signal optique amont (311) à une fibre optique du réseau optique passif (100, 600, 610), et/ou
- l'ONU (300) est configurée pour recevoir le signal optique aval (312) en provenance d'une fibre optique du réseau optique passif (100, 600, 610).

3. ONU (300) selon l'une quelconque des revendications précédentes, dans laquelle l'unité de génération d'oscillateur local (302, 303, 304) comprend

- un coupleur optique (302) configuré pour extraire une partie du signal optique amont (311).

4. ONU (300) selon la revendication 3, dans laquelle l'unité de génération d'oscillateur local (302, 303, 304) comprend un isolateur (303) configuré pour éviter que la lumière réfléchie par des composants de l'unité de génération d'oscillateur local (302, 303, 304) et/ou du récepteur cohérent (305, 306) ne distorde le signal optique amont (311) et/ou n'endommage l'émetteur (301).

5. ONU (300) selon l'une quelconque des revendications précédentes, dans laquelle l'unité de génération de raie spectrale (304) est en outre configurée pour

- régler la puissance du signal optique amont (311) ou du signal dérivé de celui-ci, réglant ainsi la puissance du signal d'oscillateur local (313).

6. ONU (300) selon l'une quelconque des revendications précédentes, dans laquelle l'unité de génération de raie spectrale (304) comprend un amplificateur optique à semi-conducteur fonctionnant à l'état de saturation.

7. ONU (300) selon l'une quelconque des revendications précédentes, dans laquelle le récepteur cohérent (305, 306) comprend un mélangeur cohérent (305) configuré pour démoduler le signal optique aval (312) à l'aide du signal d'oscillateur local (313), produisant ainsi un signal d'interférence ; dans laquelle une composante de bande de base du signal d'interférence correspond à une version démodulée du canal aval (312).

8. ONU (300) selon la revendication 7, dans laquelle le récepteur cohérent (305, 306) comprend une pluralité de photodétecteurs (306) configurés pour convertir les composantes de signal du signal d'interférence du domaine optique vers le domaine électrique.

9. ONU (300) selon l'une quelconque des revendications précédentes, dans laquelle le récepteur cohérent (305, 306) est configuré pour accéder à toutes les polarisations d'un champ optique du signal optique aval (312).

10. ONU (300) selon l'une quelconque des revendications précédentes, dans laquelle l'émetteur (301) comprend un réseau de Bragg sur fibre (502) et un amplificateur optique réfléchissant à semi-conducteur (501), configurés conjointement pour former une cavité laser de longueur d'onde amont.

11. ONU (300) selon l'une quelconque des revendications précédentes, dans laquelle l'émetteur (301) est configuré pour régler la longueur d'onde amont.

12. ONU (300) selon l'une quelconque des revendications précédentes, dans laquelle

- le canal amont (321) et le canal aval (322) sont des canaux à multiplexage par répartition en longueur d'onde, appelé WDM ; et/ou
- le signal optique aval (312) contient un ou plusieurs canaux aval voisins (323) de longueurs d'onde différentes de la longueur d'onde amont ; et/ou
- le signal optique amont (311) contient un ou plusieurs canaux amont voisins de longueurs d'onde différentes de la longueur d'onde amont.

13. ONU (300) selon l'une quelconque des revendications précédentes comprenant en outre

- une interface optique configurée pour connecter une fibre de transmission optique du PON (100, 600, 610) ; et
- un circulateur optique (307) configuré

- pour transmettre le signal optique aval (312) de l'interface optique au récepteur cohérent (305, 306) ; et
- pour transmettre le signal optique amont (311) de l'émetteur (301) à l'interface optique.

**14.** Réseau optique passif (100, 600, 610), comprenant

- un terminal de ligne optique (104) configuré pour transmettre un signal optique aval (312) ;
- un réseau de distribution optique (102, 601, 611) configuré pour transmettre le signal optique aval (312) ou une partie de celui-ci à une ou plusieurs unités de réseau optique (101, 300) ; et
- la ou les unités de réseau optique (101, 300) selon l'une quelconque des revendications 1 à 13.

**15.** Réseau optique passif (100, 600, 610) selon la revendication 14, dans lequel le réseau de distribution optique (102, 601, 611) comprend

- un diviseur optique passif (601, 102) configuré pour transmettre le signal optique aval (312) à la ou aux unités de réseau optique (101, 300) et/ou configuré pour agréger un ou plusieurs signaux amont (311) de longueurs d'onde amont différentes transmis par la ou les unités de réseau optique (101, 300), respectivement ; ou
- un démultiplexeur optique (611), par exemple un réseau sélectif planaire, configuré pour transmettre sélectivement un ou plusieurs ensembles de canaux contenus dans le signal optique aval (312) à la ou aux unités de réseau optique (101, 300), respectivement, et/ou configuré pour multiplexer un ou plusieurs signaux optiques amont (311) de longueurs d'onde différentes transmis par la ou les unités de réseau optique (101, 300), respectivement.

**Fig. 1**

**Fig. 2**

**Fig. 3**

**Fig. 4**

**Fig. 5**

**Fig. 6**

**EP 2 693 664 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110229135 A1